# EUROPEAN PATENT SPECIFICATION

(11) **EP 1 144 186 B1**
(45) Date of publication and mention of the grant of the patent: **27.10.2004**
(21) Application number: 99963728.3
(22) Date of filing: 23.11.1999
(51) Int. Cl.: B32B 5/18

(54) **MULTILAYER STRUCTURE FOR PACKAGING AND PACKAGING CONTAINERS MANUFACTURED THEREFROM, AS WELL AS METHOD FOR MANUFACTURING OF THE MULTILAYER STRUCTURE**
MEHRSCHICHTIGE STRUKTUR ZUR VERPACKUNG UND DARAUS HERGESTELLTE VERPACKUNGSBEHÄLTER, SOWIE VERFAHREN ZUR HERSTELLUNG DIESER STRUKTUR
STRUCTURE MULTICOUCHE D'EMBALLAGE ET CONTENANTS D'EMBALLAGE AINSI FABRIQUES, ET PROCEDE DE FABRICATION DE CETTE STRUCTURE

(30) Priority: 26.11.1998 SE 9804090
(43) Date of publication of application: 17.10.2001
(73) Proprietor: Tetra Laval Holdings & Finance S.A., 1009 Pully (CH)
(72) Inventor: ANDERSSON, Thorbjörn, S-240 17 Södra Sandby (SE); OLSSON, Hakan, S-225 92 Lund (SE)
(74) Representative: Forsberg, Lars-Ake
(86) International application number: PCT/SE1999/002151
(87) International publication number: WO 2000/030846

(56) References cited:
- EP-A1- 0 590 465
- WO-A1-95/15257
- SE-B- 380 470
- SE-B- 468 635
- US-A- 5 128 196

## Description

### TECHNICAL FIELD

The present invention relates to a multilayer structure for packaging, having gas barrier properties and rigidity of at least 100 mN, as well as to dimensionally stable packaging containers manufactured therefrom. It also relates to a method for manufacturing of such a multilayer structure.

Furthermore, the invention relates to extrusion-blow moulded packaging containers from a multilayer structure according to the invention and to a method for manufacturing such extrusion-blow moulded containers.

### BACKGROUND ART

Packaging containers for food (with the term "food" is to be understood all kinds of food products, including liquid and high viscosity fluid food products and, thus, also beverages) may be from a flexible type, i.e. wrapping films, pouches, sachets and the like, or from a more rigid type, i.e. boxes, cups, bottles, jars or troughs, or from a combination of these.

In food packaging, it is often important that the package has the ability to keep the packed product fresh for as long time as possible, depending on the circumstances. In for example aseptic packaging, i.e. packaging of food under sterile conditions, it is common that the storage time at ambient temperature may be extended up to several months, even a year, if the packaging material has the right properties for preserving the quality of the food. The most important feature among such properties is that the packaging material has barrier properties against the penetration of gases from the outside of the package into the packed product. In particular, penetration of oxygen has to be reduced to a minimum, since it has a deteriorating effect on for example the content of vitamins and other nutritional substances, and also on the growth of microorganisms.

Gas barrier properties are often provided in the packaging material by including layers or wrappings made of a material possessing such properties into the package. It is, for example, very common to include a layer of aluminium foil in the package. Other materials capable of imparting oxygen barrier properties are for example glass, and certain polymers, such as for example ethylenevinyl alcohol (EVOH), polyvinyl alcohol (PVOH) or polyamides (PA).

Aluminium foil is a very efficient gas barrier material, however rather costly. The alternative materials are also quite expensive and need to be applied in rather thick layers in order to provide gas barrier properties that are sufficient and in line with an aluminium foil.

In EP-A-590 465, the principle of employing a "gas-trap" into composite packaging films for obtaining improved gas barrier properties, is described. By providing an empty space between the inner and outer plies of the packaging container wall, penetrating oxygen gas from the outside of the package will first penetrate the outer ply into the empty space and gradually build a partial pressure of oxygen there, before it starts penetrating the inner ply further into the packed product. The gas penetration through the inner ply into the product will accordingly occur at a much lower rate of penetration in the beginning, after the multilayer structure has been manufactured. This delay in gas penetration will promote a longer shelf-life of the packed product, i.e. storage life on the shelf in the store or in the cupboard or refrigerator in the kitchen.

EP-A-590 465 further describes in detail the calculations for the delay of penetration of oxygen and mentions in connection with Figure 11 that the empty space may be constituted by a plastic foam matrix, containing a plurality of smaller spaces. It states in the explanations to the calculation formulas that the inner and outer plies to some extent have barrier properties against the penetrating gas, and that, preferably, they should both have the same properties in this respect for optimum gas barrier properties of the construction. In column 6, lines 5-17, some materials suitable for the inner and outer plies are suggested. As alternatives among others, PVDC and nylon (PA) are mentioned as suitable materials. However, it is nowhere stated that the inner and outer plies must possess gas barrier properties. On the contrary, according to EP-A-590465, the inner and outer plies may advantageously be made out of any cheap polymer, preferably an edible polymer with the "gas-trap" (oxygen-free space or foam) constituting the only gas barrier in the package wall.

Also in US4454945, the use of a foamed "gas-trap" space between inner and outer plastic layers is mentioned although the document as a whole is more oriented towards the bag-in-box type of packages. The only example of material for the plastic layers mentioned is polyethylene terephtalate (PET), which does indeed provide some gas barrier properties, however, not sufficient for obtaining gas barrier properties such as required according to the present invention. It is nowhere stated that the inner and outer plastic layers should comprise actual gas barrier layers.

Furthermore, US4454945 shows a number of embodiments of packages including a gas trap, which packages may be either flexible or rigid in construction. The rigidity of the package is disclosed as being entirely provided by means of a separate package wall, preferably an outer box of a plastic-coated paperboard. A packaging container in which the expanded polymer layer, as well as the surrounding layers are actually laminated to each other has not been suggested.

DE-A-1951161 describes a rigid bottle of plastic having improved capability of being pressed upon for dosage of the content while emptying and then being restored to its original shape, the packaging wall comprising mainly a foamed layer of plastic. The bottle has outermost skin layers of homogeneous plastic and may also contain a gas barrier layer from PA or EVOH between the foamed layer and the outermost layer towards the outside of the package. DE-A-1951161 does not at all mention the possibility of employing the foamed layer into the gas barrier function.

In the Swedish Patent Application No 97020267; corresponding to International Application PCT/SE/9800970 (not published at the date of filing of this application), is described an extrusion/ blow moulded bottle comprising a foamed layer of plastic material comprising a first, rigid polymer and a second, ductile (soft) polymer surrounded by outer homogeneous layers of the same polymer as the first rigid polymer in the foamed layer. Preferably, the first, rigid polymer is selected from high density polyethylene (HDPE) and high melt strength polypropylene (HMS PP), while the second, ductile polymer is selected from low density polyethylene (LDPE) and polypropylene of a grade for general purposes (GP PP). By producing the foam from two different polymer components in this way, an improved foamed layer is obtained, thus resulting in a bottle having superior mechanical properties and rigidity as well as reduced weight. In SE97020267 it is explained that increased rigidity is obtained by means of the so-called "sandwich-structure effect" (also called "I-beam effect"), i.e. that the two outer layers of approximately the same rigidity co-operate with the foamed layer, providing a distance between the two outer layers, thus resulting in the strength and rigidity of an I-beam sandwich construction, at a significantly reduced weight, compared to a construction having only solid, homogeneous layers of plastic.

Also, the aspect of saving costs, since the production of such packaging containers involve a reduced amount of material compared to solid wall structure packages, as well as the aspect of easier manual handling at transport and distribution, due to the reduced weight at maintained rigidity of the package, is put forward in SE97020267.

The aspect of providing a gas barrier in such a bottle by the aid of the expanded polymer layer has, however, not been discussed.

The published Swedish Patent Application No. 380470 describes a packaging laminate with good creasing, sealing and stiffness characteristics, comprising a core layer of a foamed plastic material, paper layers applied on each side of said foamed layer and outermost layers of a heat sealable thermoplastic polymer. It mentions polystyrene as a suitable expandable polymer and suggests polyethylene for the outermost thermoplastic layers. The thickness of the foamed layer is disclosed to be preferably 0.3-1.0 mm, while the thickness of the respective paper layers is disclosed as preferably 0.15-0.60 mm. The disclosed packaging laminate provides a structure having improved creasing capacity compared to conventional laminates comprising a paperboard core layer, as well as good stiffness and sealing characteristics and which is cheap to manufacture. SE380470 does not, however, describe the stiffening effect of the I-beam sandwich construction of two thinner but rigid paper layers disposed at a distance from each other by means of the foamed base layer in the between them. It discloses that the base layer may be covered with a paper layer either on one or on two sides, which implies that the sandwich stiffening effect was not fully understood when writing that application. This effect is merely inherently obtained. In addition, SE380470 does not mention anything about gas barrier properties of the packaging laminate.

### OBJECTS OF THE INVENTION

It is therefore, an object of the present invention to obviate the above described drawbacks of the prior art packaging material structures and to provide a multilayer structure for packaging having gas barrier properties as well as good mechanical properties, in particular rigidity, and reduced weight.

This object has been attained according to the present invention by means of a multilayer structure as defined in claim 1, having a rigidity of at least 100 mN, preferably at least 300 mN (as measured by SCAN-P 29:35 bending resistance test), and at least comprising an intermediate layer from an expanded polymer comprising a rigid component and a ductile component and on each side of said expanded polymer layer, a gas barrier layer, the material of the gas barrier layer having an oxygen gas permeability of at most about 2000, preferably at most 1000, more preferably at most 100, cm³/m² at 23 °C and 0 % RH, per 1 µm thickness, during 24 h, at 1 atm.

The required rigidity is obtained by laminating a homogeneous layer contributing to the total rigidity of the multilayer structure on each side of said expanded polymer layer. By "contributing to the total rigidity of the multilayer structure" is meant that the layers by themselves display some rigidity as well as the contribution by means of the above described sandwich-effect or I-beam effect.

The rigidity may be provided by means of separate layers, incorporated into the multilayer structure in addition to said gas barrier layers, or alternatively by the gas barrier layers themselves.

The required total rigidity of the multilayer structure is between at least about 100 mN up to about 2000 mN, preferably at least about 300 mN up to about 800 mN, as measured in bending resistance tests according to SCAN-P Norm No. 29:35 (Scandinavian Pulp).

A rigidity, also called bending resistance, of 300 mN is about the rigidity of the packaging laminate in a conventional Tetra Brik® or Tetra Rex® one-litre package. A rigidity of 65 mN, corresponds to the rigidity of a smaller paperboard-package, such as cream-packages of 2 dl, or the like. A rigidity of 2000 mN is very inflexible, such as a thick sheet of steel and 800 mN is the upper limit of what can realistically be handled in a food packaging material.

The gas barrier properties of the multilayer structure depends on the choice of gas barrier material as well as on the thickness of the gas barrier layers. By combining the gas barrier effect of the foamed intermediate "gas-trap" and the gas barrier properties of the surrounding gas barrier layers, a structure having superior gas barrier properties may be provided. Alternatively, by adjusting the choice of materials to the need of sufficient gas barrier properties for a specific purpose, a more cost-effective multilayer structure may be provided. Thinner surrounding gas barrier layers or a choice of a cheaper gas barrier material may be compensated for by the increase in gas barrier effect due to the expanded polymer layer.

Another object of the present invention is to provide such a multilayer structure that is sealable to itself when being formed into a packaging container.

If providing the multilayer structure according to claim 1 with outermost layers of a heat sealable thermoplastic polymer, packaging containers may easily be formed by means of conventional heat sealing techniques, such as induction heat sealing or heat sealing by means of ultra sonic waves.

According to a preferred embodiment, the expanded polymer layer in its cells and/or open cavities is filled with a substantially anaerobic gas or has a lower partial pressure of oxygen, alternatively have a negative pressure. The barrier against oxygen permeation is then greater in the beginning when the multilayer structure has first been manufactured, since the permeation rate between the outside of the package and the packed product then is rather low. After a longer time, the cellular cavities of the expanded polymer will be filled with the same gas or air as in the environment outside of the package, and the permeation rate into the packed product will be higher. According to a most preferred embodiment, the cellular cavities are filled with an anaerobic gas such as nitrogen or carbon dioxide.

Preferably, the expanded polymer has at least about 500 cells/mm³, preferably at least about 1000 cells/mm³. The inventors of the present invention have scientifically calculated and concluded that a high amount of small cells provide a more efficient obstacle towards penetration of the gas molecules, than does a small amount of large cavities. According to a further preferred embodiment of the present invention, the cells of the expanded polymer should be closed substantially without connection between the cellular cavities. By having closed cells in the expanded polymer layer, there is provided multiple thin walls of the polymer material within the expanded layer, which walls also will have to be penetrated by the migrating gas by diffusion instead of by convection, thus providing further obstacles to permeation of gas molecules.

According to a further preferred embodiment of the invention, the polymer of the expanded polymer layer also is a polymer having gas barrier properties. The multiple cell walls provided between the many small cells then have even higher capacity of resisting penetration of gas molecules. Most preferably, the polymer material of such an expanded gas barrier polymer has an oxygen gas permeability of at most about 2000, preferably at most about 1000, cm³/m² at 23 °C and 0 % RH, per 1 µm thickness, during 24 h, at 1 atm. Suitable such gas barrier polymers for the expanded polymer layer are for example polyamides (PA), polyacrylonitrile (PAN) or polyethylene naphthenate (PEN).

The total gas barrier properties obtained in the multilayer structure is preferably at least 25, and most preferably at least about 10, cm³/m² at 23 °C and 0 % RH, per 1 µm thickness, during 24 h, at 1 atm.

Other polymer materials suitable for the expanded polymer layer in the multilayer structure according to the invention are for example polyethylenes (PE), polypropylenes (PP), polystyrene (PS), polyethylene terephtalate (PET) or glycol-modified polyethylene terephtalate (PETG).

In order to provide a foamed polymer layer with improved mechanical characteristics, a first rigid component and a second ductile polymer component are blended and used as the expandable polymer material. The rigid component forms the "skeleton" or interstices in the foamed layer structure, while the ductile (soft) polymer component forms "skin" or cell walls between the above-mentioned skeleton or interstices.

Preferably, the first rigid polymer component is selected from the group essentially comprising a high density polyethylene (HDPE) and high melt-strength polypropylene (HMS PP) and the second, ductile polymer component is selected from the group essentially comprising low density polyethylene (LDPE) and polypropylene graded for general purposes (PP GP) and most preferably, the rigid and ductile polymer components are of the same polymer type.

Advantageously, the mixing ratio of the first, rigid polymer component to the second, ductile polymer component in the expanded polymer layer is between 1:3 and 3:1, preferably from about 1.25:1 to about 1.5:1, based on weight.

A suitable thickness of the expanded polymer layer varies from about 100 µm to about 2000 µm, preferably from about 200 µm to about 1000 µm.

Preferably, the gas barrier layers comprise a material selected from the group consisting of ethylenevinyl alcohol (EVOH), polyamides (PA), polyvinylidene chloride (PVDC), polyvinyl alcohol (PVOH), polyethylene naphthenate (PEN), polyacrylonitrile (PAN), copolymers of acrylonitrile and butylene ("Barex"), oriented polyethylene terephthalate (OPET) or SiOx, since these materials have previously proved to have adequate properties in various packaging materials and fulfil the requirements of the desired gas barrier properties.

Preferably, the gas barrier properties of each gas barrier layer is at least 150, and most preferably at least about 100, cm³/m² at 23 °C and 0 % RH, per 1 µm thickness, during 24 h, at 1 atm.

According to one preferred embodiment of the multilayer structure of the invention, the layers contributing to the total rigidity of the laminate comprise a polymer selected from a group consisting of high density polyethylene (HOPE), polypropylene (PP), polyethyleneterephtalate (PET) and polybutyleneterephtalate (PBT), since layers from these polymers display a high extent of rigidity and thus fulfil rigidity requirements of the present invention.

When applied onto each side of the expanded polymer layer they contribute to the total rigidity of the multilayer structure by means of the above explained sandwich-effect or I-beam effect.

Suitably, the total thickness of the gas barrier layer and the layer contributing to the total thickness of the multilayer structure should be from about 50 µm to about 250 µm on each side of the expanded polymer layer.

According to an alternative embodiment, however, the layer contributing to the total rigidity of the laminate may be the same layers as the gas barrier layers, such as a layer comprising polyamide (PA), PEN, EVOH,PAN or copolymers from acrylonitrile and butylene, most preferably from PA. This embodiment, however, requires a rather thick layer of the more expensive gas barrier material and is thus not the most preferred. When employing different layers for the rigidity and for the gas barrier properties, more of the cheaper rigid polymer can be used and less of the expensive gas barrier material.

The thickness of the layer of for example polyamide should then be at least about 50 µm and up to 250 µm.

It is also an object of the present invention to provide a multilayer structure having good gas barrier properties, rigidity as well as high adhesion between the expanded polymer layer and the surrounding layers.

According to a preferred embodiment of the invention, the different layers have been laminated to each other in one operation by means of co-extrusion of the layers. By means of co-extrusion, eventual problems with the adhesion between the layers in a multilayer structure are generally fewer.

These objects have also been attained according to the present invention by means of a multilayer structure as defined in claim 15, at least comprising a layer of an expanded polymer and applied on each side of said expanded polymer layer, a paper layer and a gas barrier layer having an oxygen gas permeability of at most about 2000, preferably at most about 1000, most preferably at most about 100 cm³/m² at 23 °C and 0 % RH, per 1 µm thickness, during 24 h, at 1 atm.

By surrounding the expanded polymer layer with gas barrier layers as well as with paper layers, the paper layers contributing to the total rigidity of the multilayer structure by means of the sandwiching-effect, a multilayer packaging structure having improved gas barrier properties as well as improved creasing and folding capacity and rigidity is obtained. The expanded polymer layer is compressible due to the collapsible cells and/or cavities in the foam, thus easy to crease and fold into distinct folds and corners in a package fold-formed from the multilayer structure, in comparison to a base layer of thick paperboard of the type conventionally used for liquid food packaging. Still, the multilayer structure has improved, rigidity. Furthermore, such, distinct folds and corners in a package also contribute to the rigidity and stiffness at handling of the packaging container as a whole.

A further advantage of a multilayer structure having a base layer from an expanded polymer layer is that when sealing the laminate by means of simultaneous application of heat and pressure along the sealing zones, the expanded polymer layer will collapse and be sealed together. Thus, there will be no open edges of the multilayer structure, into which penetration of moisture can occur, such as is the case concerning laminates having a paperboard core layer.

Preferably, such a multilayer structure is rendered heat sealable to itself for being formed into a packaging container. This object is attained by including outermost liquid barrier layers from a sealable thermoplastic polymer in the multilayer structure. If providing the multilayer structure according to claim 15 with outermost layers from a heat sealable polymer, packaging containers may easily be formed by means of conventional heat sealing techniques, such as induction heat sealing or heat sealing by means of ultra sonic waves. Suitable such heat-sealable polymers are thermoplastic polymers such as polyethylene, polypropylene or polystyrene, preferably low density polyethylenes (LOPE, LLDPE, M-PE (metallocene-polyethylene)). Suitably, such outermost layers of a heat-sealable low density polyethylene are applied in an amount of about 5-25, preferably about 5-20, most preferably about 5-15 g/m².

According to a preferred embodiment of the multilayer structure of the invention, the gas barrier layer is directly bonded to the expanded polymer layer. By this arrangement, the adhesion between the expanded base layer and the surrounding layers may be improved.

According to another preferred embodiment of the invention as defined in claim 15, the material in said gas barrier layer at least comprises a polymer containing functional hydroxyl groups, such as for example various biodegradable polymers or polymers selected from the group consisting of ethylene vinyl alcohol (EVOH) or polyvinyl alcohol (PVOH). Such gas barrier polymers may advantageously be applied to a paper base layer by means of so-called Liquid Film Coating Technology (LFC), by means of an aqueous dispersion or solution of the polymer. The LFC technology has made it possible to apply very thin, homogeneous, high quality layers onto a base layer, thus reducing the amounts of material employed as well as costs. The quantity of applied solution/dispersion may vary, but is preferably in such an amount that a thoroughly integrated and substantially unbroken layer is formed after drying, for example about 0.5-20 g/m², preferably about 2-10 g/m², based on dry weight.

In a further preferred embodiment of the multilayer structure of the invention, the gas barrier layer further comprises an additive copolymer comprising functional groups selected from the group consisting essentially of carboxylic acid groups, carboxylic acid anhydride groups and metal salts of carboxylic acids. Such polymers may be polyolefin homo- or copolymers that have been modified or grafted with monomers containing such groups, alternatively copolymers from olefin monomers with such functional-group containing monomers. Examples of such additive copolymers are for example ethylene acrylic acid copolymer (EAA), ethylene methacrylic acid copolymer (EMAA), ethylene butyl acrylate copolymer (EBA), olefin polymers grafted with maleic acid anhydride or ionomers, such as for example Surlyn®. Another suitable such additive copolymers is ethylene vinyl acetate (EVAc). The most preferred additive copolymers according to the present invention is EAA, especially when the expanded polymer layer substantially comprises an ethylene or propylene polymer, since the adhesion between the gas barrier layer and the expanded polymer layer will then be further improved. On the other hand, when an expanded polymer layer from polystyrene is used, EVAc is the most suitable additive copolymer in the gas barrier polymer composition.

When heating the coated aqueous composition of hydroxyl-group containing polymer and carboxylic-moiety containing additive copolymer, drying as well as some kind of bonding takes place in order to provide a moisture resistant polymer layer having excellent gas barrier properties.

In particular, a gas barrier polymer composition for application by means of LFC technology comprises PVOH and EAA as the additive copolymer. Preferably, the composition comprises from about 5 to about 50 weight-% of EAA, more preferably from about 10 to about 30 %, most preferably about 20 weight-%.

Gas barrier performances of less than 10, preferably less than 3, most preferably less than 1, cm³ transmission of O₂ /m2, 24 h, 1 atm. at 23 °C and 50 % RH may thus be obtained.

Polymer materials suitable for the expanded polymer layer in the multilayer structure according to the invention as defined in claim 15, are for example polyethylenes (PE), polypropylenes (PP), polystyrene (PS), polyethylene terephtalate (PET) or glycol-modified polyethylene terephtalate (PETG). Polyethylene foams are preferred, since they adhere more easily to the adjacent paper layers in the structure, and most preferably, the foams have the composition of a rigid and a ductile polyethylene, as described above.

Preferably, the paper layers have a surface weight of between about 20 g/m² and about 120 g/m², preferably of between about 30 g/m² and about 60 g/m², most preferably of between about 40 g/m² and about 60 g/m².

By using thinner paper layers, the resistance to creasing and fold-forming as normally displayed by a paperboard core layer in a packaging laminate will be avoided. The upper limit of the paper thickness should thus be sufficiently far removed from the thicknesses normally employed when producing a paperboard laminate, in which the rigidity is depending solely on the paperboard base layer. However, in order to contribute to the total rigidity of the multilayer structure having a centre layer of an expanded polymer layer having good creasing capacity, the paper layers applied onto each side thereof may not be too thin and weak.

A further object of the present invention is to provide a method for manufacturing of the multilayer structure according to the invention.

In particular, an object of the present invention is to provide a method for lamination and extrusion/ expansion of such a multilayer structure, i.e. a method at least comprising the steps of mixing a granulate of the expandable polymer material with a chemical, carbon dioxide-generating blowing agent during simultaneous heating, for decomposition of the chemical blowing agent and for the formation of a molten plastic mass with homogeneously distributed carbon dioxide blisters; compressing the molten carbon dioxide-containing plastic mass to an excess pressure during simultaneous cooling for converting the carbon dioxide blisters into an overcritical state, and forcing the compressed, cooled plastic melt through a nozzle aperture during simultaneous expansion of the overcritical carbon dioxide blisters for the formation of the expanded polymer layer.

Preferably, the chemical, carbon dioxide-generating blowing agent is selected from the group essentially comprising sodium hydrocarbonate, citric acid and mixtures thereof, the quantity of blowing agent being approximately 0.5-2.5 % of the total weight of the mixture.

The lamination of the different layers to each other may take place in different ways.

In a preferred embodiment, by forcing the molten, cooled plastic mass of expandable polymer material through a nozzle aperture at the same time as forcing a molten, homogeneous polymer, by a co-extrusion process, through corresponding nozzle apertures, surrounding outer layers of the multilayer structures as defined in claims 1-14, may be formed. By selecting the right material combinations for the different layers, multilayer structures having excellent adhesion between the layers may be obtained by such a co-extrusion, expansion method.

According to another embodiment of the invention, the method comprises the steps of coating each of the two paper layers with a gas barrier polymer, advancing said paper layers towards each other, applying and expanding said expandable polymer between said paper layers and laminating the layers to each other.

The lamination of the paper layers to the expanded polymer layer may be carried out for example by means of intermediate adhesive layers, heat fusion or extrusion lamination.

According to a preferred embodiment of the invention, such a method comprises the steps of coating each of the two paper layers employed in the multilayer structure with a gas barrier polymer, heating the paper layers, advancing said paper layers towards each other in such a way that the gas-barrier coated sides are facing each other, applying and expanding said expandable polymer between said paper layers and laminating the layers to each other by means of heat fusion.

The coating and heating steps may be performed simultaneously by means of extrusion coating of the gas barrier polymer onto the paper layers, and while the paper layers are still hot, laminating them to each other by simultaneously extruding and expanding the expandable polymer material between the hot extrusion coated paper layers. Such lamination by means of direct heat fusion provides good adhesion by using the heat from the extrusion steps only, thus providing a more economical and efficient production process.

According to another preferred embodiment of the method of the invention, the method comprises the steps of coating each of the two paper layers with an aqueous dispersion of a gas barrier polymer composition by means of liquid film coating technology, subsequently drying the coated paper layers at high temperature, preferably up to 190°C, most preferably at about 170°C, and advancing them towards each other in such a way that the gas-barrier coated sides are facing each other, laminating the paper layers to each other while still hot, by simultaneously applying and expanding said expandable polymer material between them.

Such lamination by means of direct heat fusion between the still hot gas barrier layer and the expanded polymer layer provides good adhesion by using the heat from the drying and extrusion steps only, thus providing a more economical and efficient production process. If the heat from the extrusion process and the dispersion coating drying process respectively would not be available, heating by means of hot air of about 700 °C would be required.

In particular, when the gas barrier polymer dispersion further comprises a polymer displaying good compatibility with the polymer of the expandable material, such as is the case when EAA is additionally used together with the gas barrier polymer, the adhesion between the gas barrier layers and the intermediate foamed layer will be further improved. Especially, with a gas barrier composition of PVOH and EAA, when applied by means of liquid film coating and subsequently dried, excellent gas barrier properties will be obtained at the same time as the gas barrier layer will have improved resistance to water and moisture, as disclosed in the International Application (publication No.) WO97/22536. Also, due to the content of EAA in the gas barrier layer, the adhesion of the gas barrier layer to surrounding layers is further improved, in particular when the expanded polymer layer comprises a polyolefin and most particularly when it comprises polyethylene.

Preferably, for the same reasons as mentioned above, the method of the invention further comprises the step of coating each of the paper layers on its other side with a heat sealable liquid barrier polymer.

Multilayer structures comprising layers of foamed plastic are conventionally produced by an extrusion foaming process. An important advantage with producing the multilayer structure according to the present invention by means of such extrusion foaming is that the cells and/or cavities of the expanded polymer layer will automatically be filled with the anaerobic expansion gas, most preferably carbon dioxide. It is even more advantageous if the foamed layer simultaneously is encapsulated between solid, homogeneous layers of a gas barrier polymer.

According to a further aspect of the invention, there is provided a dimensionally stable packaging container manufactured from the multilayer structure of the invention.

Such packaging containers may be manufactured by means of creasing, fold-forming and sealing either from blanks of the multilayer packaging material, or from a continuous web. Blanks are fold-formed and sealed into a capsule, which is still open at the top or bottom and, thus, ready for filling with the food product to be packed, and subsequent sealing of said top or bottom, for example by means of conventional heat sealing techniques, such as induction heating or heating by means of hot air or ultrasonic waves. A continuous web is converted into packages by first shaping and longitudinally sealing the web into a continuous tube, continuously filling the tube with the food product to be packed and transversally sealing off pillow-shaped packages from the filled tube, conventionally by means of induction heated sealing jaws or alternatively by means of an ultrasonic sealing arrangement.

A further object of the present invention is to provide an extrusion/blow moulded packaging container having gas barrier properties as well as improved good mechanical properties, in particular rigidity, and reduced weight.

Bottles and similar containers of plastic are conventionally produced by a combined extrusion /blow moulding process. An important advantage with producing the multilayer structure according to the present invention by means of extrusion/ blow moulding is that the cells and/or cavities of the expanded polymer layer will automatically be filled with the anaerobic blowing gas, most preferably carbon dioxide, and simultaneously the foamed layer will be encapsulated between solid layers of a gas barrier plastic. Furthermore, extrusion/blow moulding is a highly preferable method in general for the production of multilayer moulded containers.

According to a still further aspect of the invention, a method for manufacturing such an extrusion-blow moulded container is provided. Such a combined (co-)extrusion/ blow moulding process comprises a first (co-)extrusion step and a subsequent, second blow moulding step.

The method comprises at least the steps of mixing a granulate of the expandable polymer material with a chemical, carbon dioxide-generating blowing agent during simultaneous heating, for decomposition of the chemical blowing agent and for the formation of a molten plastic mass with homogeneously distributed carbon dioxide blisters; compressing the molten carbon dioxide-containing plastic mass to an excess pressure during simultaneous cooling for converting the carbon dioxide blisters into an overcritical state; forcing the compressed, cooled plastic melt through an annular nozzle aperture during simultaneous expansion of the overcritical carbon dioxide blisters for the formation of a hose of foamed structure, the forming of the hose of foamed structure taking place at the same time as molten, homogeneous polymer, by means of a co-extrusion process, is forced through corresponding, annular nozzle apertures for the formation of the surrounding outer layers of the multilayer structure; accomodating the multilayer structured hose in a mould cavity and inflating the hose by means of a high pressure gas against the inner walls of the mould cavity for the formation of the extrusion-blow moulded container having said multilayer wall structure.

### DETAILED DESCRIPTION OF PREFERRED EMBODIMENTS

The present invention will now be described in greater detail with the aid of preferred but non-restrictive examples, with references to the accompanying Figures, of which
Figures 1, 2, 3 and 4 each respectively schematically illustrates a cross section of a multilayer structure according to one preferred embodiment of the invention,
Figures 5a and 5b schematically illustrate one preferred method according to the invention for manufacturing of the multilayer structure and of a packaging container by means of extrusion/ blow moulding, and
Figures 6 and 7 each respectively schematically illustrate another preferred method for manufacturing of the multilayer structure according to the invention.
Figures 8 and 9 each schematically illustrate a dimensionally stable packaging container, produced from the multilayer structure according to the invention.

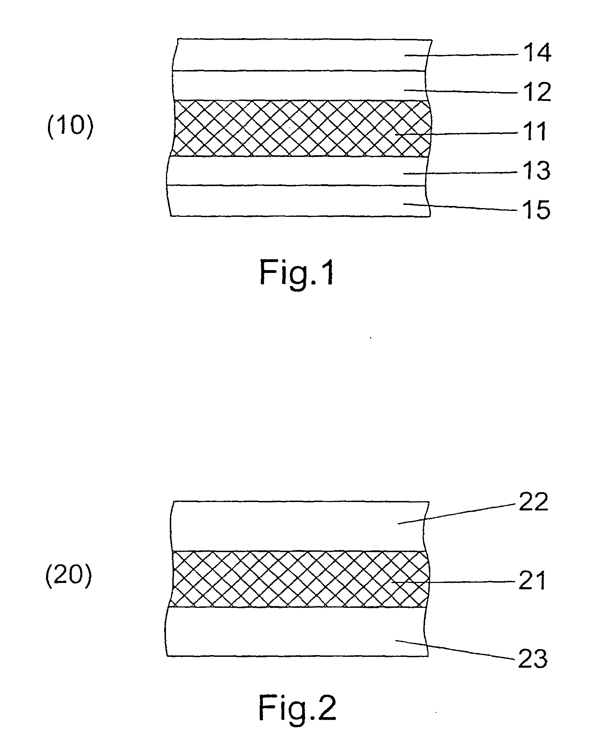

According to the preferred embodiment which is schematically shown in Figure 1, the multilayer structure comprises a central layer 11 from an expanded polymer material, layers 12, 13 on each side of the expanded polymer layer 11, from a gas barrier polymer, and outermost skin layers 14, 15 on both sides of the structure.

The gas barrier polymer material in layers 12 and 13, is for example polyamide or EVOH.

The material in the central, foamed layer 11 preferably consists of a first rigid polymer component, selected from the group essentially comprising a high density polyethylene (HDPE) and high melt-strength polypropylene (HMS PP) and a second, ductile polymer component, selected from the group essentially comprising low density polyethylene (LDPE) and polypropylene of a grade for general purposes (PP GP). More preferably, the rigid and ductile polymer components are of the same polymer type. Advantageously, the mixing ratio of the first, rigid polymer component to the second, ductile polymer component in the expanded polymer layer is between 1:3 and 3:1, preferably from about 1.25:1 to about 1.5:1, based on weight.

Optimum results as regards weight and rigidity/ thickness in the extruded /blow moulded packaging container according to the invention are achieved when the rigid component is HDPE and the ductile component is LDPE and the mixing ratio of LDPE to HDPE is 1.5:1.

The rigid, skeleton-forming polymer component in the foamed intermediate layer in the extruded multilayer structure according to the invention may also be defined as a polymer component which has a high crystallisation degree (highly crystalline), high density, few short chain branches per 1000 carbon atoms and no long chain branches at all. Correspondingly, the ductile (soft) polymer component may be defined as a polymer component which has a low degree of crystallinity, low density, many short chain branches per 1000 carbon atoms and also long chain branches. Concerning the rigid polymer component of HDPE, this implies a density in the range of 950-970 and a melt index in the range of 0.1-1.5 g/10 min at 190°C and 2.16 kg (ASTM 1278), while, for the ductile (soft) polymer component of LDPE, this implies a density in the range of 915-922 and a melt index in the range of 4.5-8.5 g/10 min.

The chemical blowing agent with which the mixture of the rigid and ductile polymer components is to be expanded or foamed may preferably be sodium hydrocarbonate and/ or citric acid, preferably a mixture of these two blowing agents in stoichiometric proportions. The total quantity of blowing agent which is employed in the production of an extruded multilayer structure by the method according to the invention may vary from approximately 0.5 to approximately 2.5 % of the total weight of the mixture. The cells and/or cavities of the expanded polymer layer will thus be substantially filled with anaerobic carbon dioxide gas, thus providing a significantly improved gas barrier effect to the multilayer structure.

A suitable thickness of the expanded polymer layer is from about 100 µm to about 2000 µm, preferably from about 200 µm to about 1000 µm.

The two outer layers 14,15 of the multilayer structure may be the same or different, but are preferably the same and produced from a polymer possessing a high modulus of elasticity, for example HDPE, whereby high strength and rigidity will be attained as a result of the so-called I-beam effect.

The relative thicknesses of the central, foamed layer 11 and the two outer homogeneous layers 14 and 15 are preferably such that the central, foamed layer 11 takes up approximately 50-90 % of the total weight of the multilayer structure, while the outer homogeneous layers 14 and 15 together with the gas barrier layers constitute approximately 10-50 % of the total weight. Preferably, the two outer surrounding layers 14 and 15 display substantially the same layer thicknesses.

Preferably, the total thickness of the gas barrier layer and the outermost layer on each side is from about 50 µm to about 250 µm. The thickness of each separate layer depends on the relative bending resistance (rigidity) properties of the different materials in the layers. If the gas barrier layer is EVOH, for example, the thickness of each gas barrier layer would be from about 2 to about 20 µm, preferably from about 5 µm to about 10 µm. The outermost layer of for example HDPE, PP, PET or PBT should then be correspondingly thicker in order to provide the desired rigidity. If the gas barrier layer is PA, on the other hand, a layer of from example 20-50 µm would be suitable together with an outermost layer of HDPE of about 20-50 µm, on each side.

According to the embodiment which is schematically shown in Figure 2, the multilayer structure comprises a central layer 21 from an expanded polymer material, and outer layers 22, 23 on each side of the expanded polymer layer 21, from a gas barrier polymer, thus providing gas barrier properties as well as rigidity to the multilayer structure. This multilayer structure may be more expensive in terms of material consumed, since the gas barrier polymer may be more expensive than polymers having a high modulus of elasticity without having gas barrier properties, such as for example HDPE, and since a thicker layer of the gas barrier polymer may have to be employed in order to attain sufficient rigidity of the multilayer structure, than what is normally required for attaining sufficient gas barrier properties. On the other hand, the structure may be economically advantageous since only one type of polymer is co-extruded together with the expanded polymer layer, thus employing fewer extruders, heaters and aperture nozzles in the co-extrusion equipment. Preferably, the gas barrier polymer functioning also as outer layers providing rigidity to the multilayer structure is a polyamide (PA), PAN, or PEN, preferably a PA selected from those currently known in the art.

The expanded polymer consists of a polymer mixture such as described in the embodiment relating to Figure 1, or alternatively of a polyamide similar to, or different from, the one employed in the layers 12 and 13.

Depending on the gas barrier material selected for the outer layers 12 and 13, the thickness of each of these layers should preferably be from about 50 µm to about 250 µm.

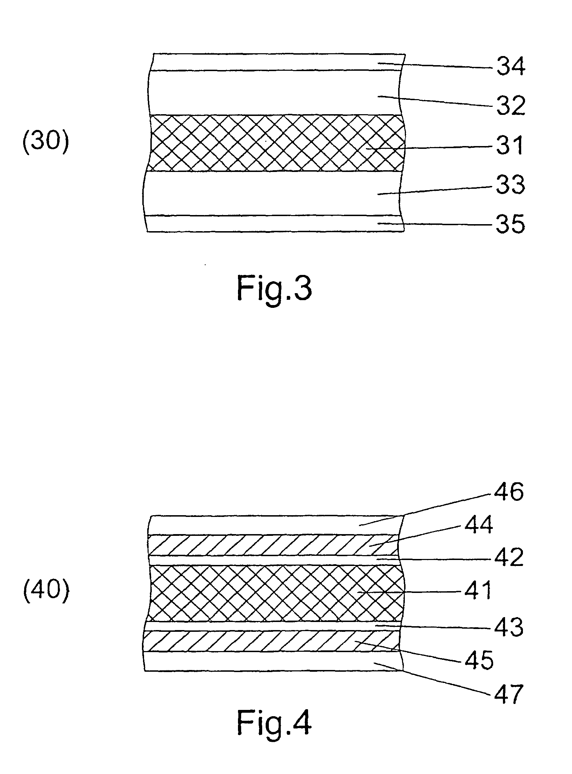

According to the embodiment which is schematically shown in Figure 3, the multilayer structure comprises a central layer 31 from an expanded polymer material, and outer layers 32, 33 on each side of the expanded polymer layer 31, from a polymer having rigidity properties such as to contribute to the total rigidity of the multilayer structure. The polymer material of the layers 32 and 33 may be for example HDPE, PP or PET.

The central layer 31 of the expanded polymer may be as previously defined in connection with Figures 1 or 2, but may also be prepared from PET.

As gas barrier layers are applied thin layers 34 and 35 of an aluminium oxide, carbon plasma deposited coatings (so-called "diamond coatings") or silicon oxid (SiOx) on the outermost surface of the layers 32 and 33. Such SiOx materials are defined as x varying between about 1.5 and about 2.2, and these types of coatings are applied by means of plasma or vacuum deposition techniques, known in the art, such as for example Chemical Plasma Vapour Deposition (CPVD). Such plasma deposited layers are very thin and can be neglected for the purpose of rigidity.

According to another preferred embodiment of the invention, which is schematically shown in Figure 4, the multilayer structure comprises a central layer 41 from an expanded polymer material, layers 42, 43 on each side of the expanded polymer layer 41, from a gas barrier polymer, paper layers 44, 45 on both sides of the structure as well as outermost layers 46, 47 of a heat-sealable thermoplastic polymer.

The gas barrier polymer material in layers 42 and 43, preferably comprises PVOH, further containing EAA copolymer. The gas barrier layers have been applied by means of liquid-film coating technology and have been dried at a high temperature, preferably at a temperature of about 170°C, such that the surface temperature of the gas barrier coated paper after drying will be about 120-130 °C. The amount of gas barrier polymer material applied is suitably about 0.5-20 g/m², preferably about 2-10 g/m², dry weight.

The material in the central, foamed layer 41 may comprise any suitable expandable polymer material, such as for example polyethylene (PE), polypropylene (PP), polystyrene (PS) or polyethyleneterphtalate (PET). It may alternatively comprise a polymer barrier material that in itself possesses at least some gas barrier properties, such as for example polyamide (PA), glycol modified polyethylene terephtalate (PETG), polyacrylonitrile (PAN) or polyethylene naphtenate (PEN).

Depending on the type of polymer selected for the expanded polymer layer and the intended use of the multilayer structure, the thickness thereof may preferably vary between about 100 and about 200 µm , preferably between about 200 and about 1000 µm.

In a preferred embodiment it consists of a polyolefin composition comprising a first rigid polymer component, selected from the group essentially comprising a high density polyethylene (HDPE) and high melt-strength polypropylene (HMS PP) and a second, ductile polymer component, selected from the group essentially comprising low density polyethylene (LDPE) and polypropylene for general purposes (PP GP). More preferably, the rigid and ductile polymer components are of the same polymer type. Advantageously, the mixing ratio of the first, rigid polymer component to the second, ductile polymer component in the expanded polymer layer is between 1:3 and 3:1, preferably from about 1.25:1 to about 1.5:1, based on weight.

Optimum results as regards weight and rigidity/ thickness in the multilayer structure according to the invention are achieved when the rigid component is HDPE and the ductile component is LDPE and the mixing ratio of LDPE to HDPE is 1.5:1. A multilayer structure according to the invention containing such an expanded polymer layer has improved mechanical properties, such as rigidity, and handling strength but still has good creasing capacity.

The rigid, skeleton-forming polymer component in the foamed intermediate layer in the extruded multilayer structure according to the invention may also be defined as a polymer component which has a high crystallisation degree (highly crystalline), high density, few short chain branches per 1000 carbon atoms and no long chain branches at all. Correspondingly, the ductile (soft) polymer component may be defined as a polymer component which has a low degree of crystallinity, low density, many short chain branches per 1000 carbon atoms and also long chain branches. Concerning the rigid polymer component of HDPE, this implies a density in the range of 950-970 and a melt index in the range of 0.1-1.5 g/10 min at 190°C and 2.16 kg (ASTM 1278), while, for the ductile (soft) polymer component of LDPE, this implies a density in the range of 915-922 and a melt index in the range of 4.5-8.5 g/10 min.

The chemical blowing agent with which the mixture of the rigid and ductile polymer components is to be expanded or foamed may preferably be sodium hydrocarbonate and/ or citric acid, preferably a mixture of these two blowing agents in stoichiometric proportions. The total quantity of blowing agent which is employed in the production of an extruded multilayer structure by the method according to the invention may vary from approximately 0.5 to approximately 2.5 % of the total weight of the mixture. The cells and/or cavities of the expanded polymer layer will thus be substantially filled with anaerobic carbon dioxide gas, thus providing an improved gas barrier effect to the multilayer structure. The total thickness of the multilayer structure of Figure 4 is preferably from about 0.2 mm to about 2 mm, more preferably from about 0.3 to about 1 mm.

Preferably, the paper layers have a surface weight of between about 20 g/m² and about 120 g/m², preferably of between about 30 g/m² and about 60 g/m², most preferably of between about 40 g/m² and about 60 g/m² .

Suitable heat-sealable polymers for the outermost layers, 46 and 47, are thermoplastic polymers such as polyethylene, polypropylene or polystyrene, preferably low density polyethylenes (LDPE, LLDPE, M-PE (metallocene-polyethylene)). Suitably, such outermost layers of a heat-sealable low density polyethylene are applied in an amount of about 5-25, preferably about 5-20, most preferably about 5-15 g/m².

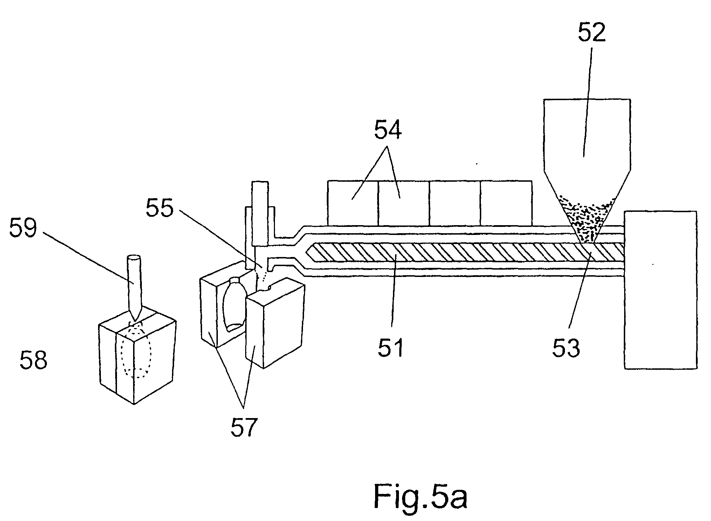

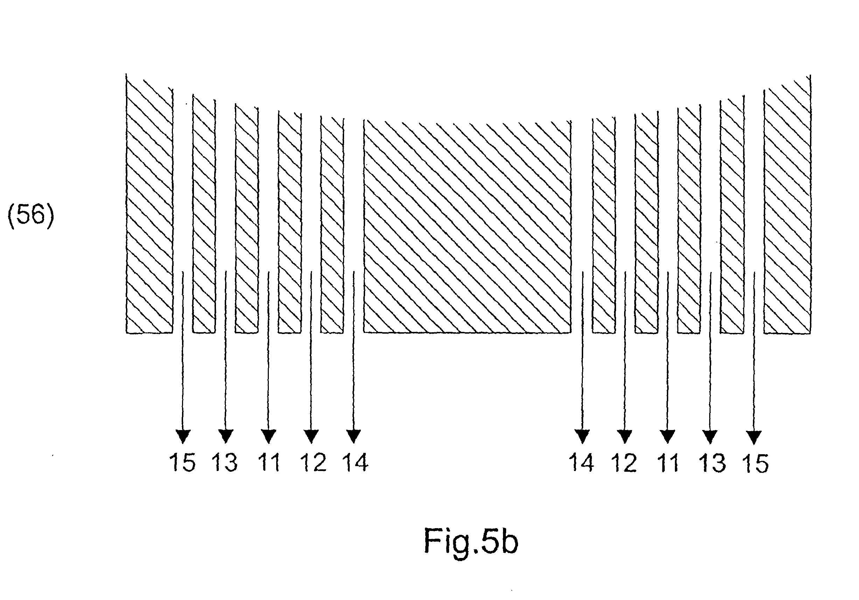

Figure 5 schematically shows a preferred method for manufacturing of the multilayer structured extrusion/ blow moulded packaging containers according to the invention, i.e. the method of combined (co-) extrusion/ blow moulding, comprising a first (co-)extrusion step and a subsequent, second blow moulding step.

Granulate starting material preferably containing i) a first rigid polymer component, preferably HDPE, ii) a second, ductile (soft) polymer component, preferably LDPE, and iii) a chemical blowing agent, preferably sodium hydrocarbonate and/ or citric acid, is fed into a screw/ cylinder apparatus 51 through a replenishment hopper 52 disposed at the rear of the apparatus. The ratio between the components preferably included in the granulate starting material is preferably such that the ratio of the ductile component to the rigid polymer component lies within the range of from 1:3 to 3:1, and most preferably 1.25:1. The quantity of the chemical blowing agent should be from about 0.5 to about 2.5 % of the total weight of the total granulate starting material.

The infed granulate starting material is subjected to high temperature in an infeed zone 53 of the screw/cylinder apparatus in which the free area between the walls of the cylinder and the screw core is minimised in order to create superior mixing conditions for the infed components in the starting material and, at the same time the starting material is heated to such an elevated temperature that the chemical blowing agent is decomposed for the formation of carbon dioxide and sodium hydrocarbonate and citric acid residues, acting as nucleation seats in the molten plastic mass.

The molten homogeneously mixed plastic starting material is advanced by the rotating screw fitted with helical blades from the infeed zone to a further compression zone 54, at the same time as the starting material is cooled for the formation of a cool homogeneous mixture under a pressure of between 200 and 300 bar excess pressure. At this high pressure, the released carbon dioxide is converted into overcritical state.

The cooled, pressurised plastic melt is thereafter forced out through a tool (nozzle) 55 which is disposed at the front end of the screw /cylinder apparatus and is provided with an annular nozzle aperture 56, for the formation of a hose at the same time as the overcritical carbon dioxide instantaneously expands at the pressure transition from the above-mentioned excess pressure of 200-300 bar to normal atmospheric pressure, for the formation of the foamed hose structure.

The extruded, foamed hose, preferably from LDPE/ HDPE, is introduced into the region between two movable mould halves 57 which are brought together for the formation of a mould cavity in which the hose is accomodated. The hose accomodated in the mould cavity is cut and the two mould halves are transferred to a blow moulding station 58 in which the hose portion accomodated between the mould halves is inflated, by means of a blowpipe 59 at least partly inserted into the hose and in communication with a source of high pressure air (not shown), towards the inner walls in the mould cavity defined by the mould halves. Thereafter, the mould halves are separated from one another for removal of the blow moulded container whose geometric outer configuration substantially corresponds to the inner mould cavity configuration.

The above-mentioned screw/cylinder apparatus is supplemented with at least one additional screw/ cylinder apparatus (not shown) connected to the same common tool 56 (Figure 5b) for co-extrusion of the solid (dense) surrounding outer layers 12,13 and/ or 14,15.

Figure 5b shows schematically a cross-section of an annular nozzle aperture for the co-extrusion of a hose. The corresponding figures of the layers in Figure 1 have been given at the respective apertures in the extrusion head. The molten, cooled expandable polymer mass is thus forced through the annular nozzle aperture 56 at the same time as molten, homogeneous polymer, by a co-extrusion process, is forced through corresponding, annular nozzle apertures for the formation of the surrounding outer layers of the foamed central hose layer. The surrounding outer layers preferably consist of a rigid polymer, preferably of the same type as the rigid polymer component used in the preferred polymer composition of the foamed central hose layer. Such a wall structure affords an extremely high mechanical strength and rigidity at very low material consumption seen as a whole.

In the above-described method extruded/ blow moulded plastic packaging containers, in particular bottles, may advantageously be produced with a nominal inner volume of 1 litre, with the same or comparable rigidity and strength as a conventional package/ bottle produced from HDPE, but with up to about 30 % less material consumption.

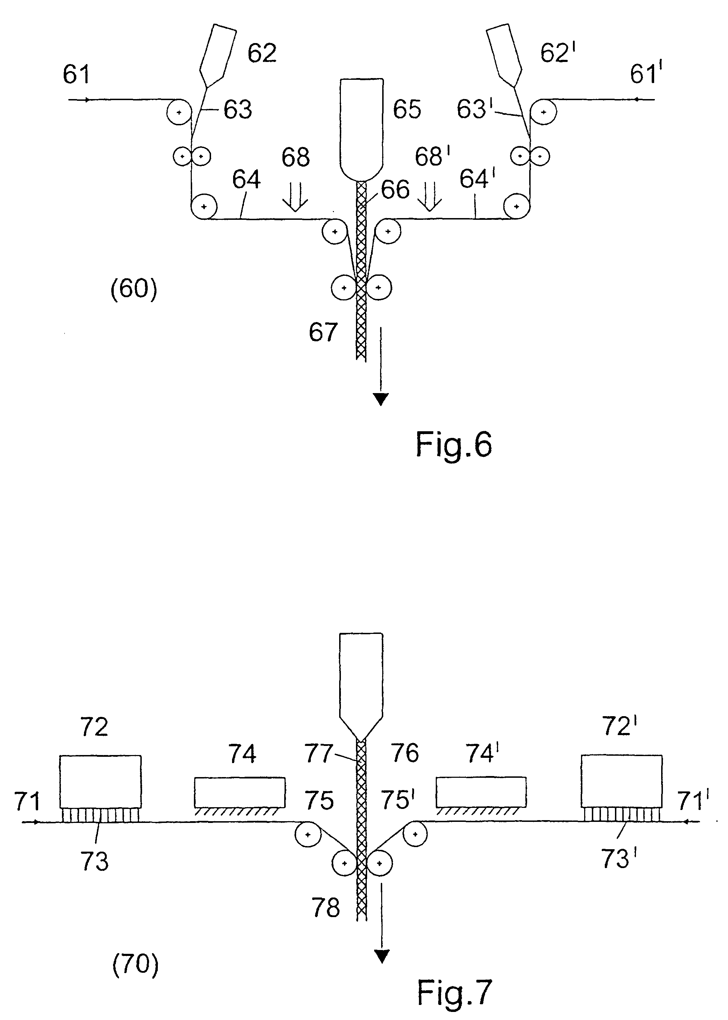

Figure 6 schematically illustrates a preferred embodiment of a method 60 of manufacturing a multilayer structure according to the invention, wherein two webs of paper 61 and 61', identical or of a similar type, are each fed to extruders 62, 62' for coating with a thermoplastic gas barrier polymer, preferably EVOH, 63, 63'. While still hot, the extrusion coated paper layers 64, 64'are advanced forward towards each other in such a way that the gas-barrier coated sides are facing each other. In a combined extrusion lamination and foam expanding station 65, the expandable polymer 66 is extruded and expanded between the coated paper layers, thus laminating the coated paper layers to each other by means of heat fusion and forming a multilayer structure 67 comprising the intermediate expanded polymer layer. The paper layers may be coated by thermoplastic heat-sealable layers on their other side, corresponding to the outermost layers in the multilayer structure, in a separate extrusion coating operation (not shown) either before or after the steps of gas barrier coating and foamed layer lamination.

If desirable, the surface temperature of the gas barrier coating, still warm from the foregoing coating operation, may be further increased by means of exposing the surface to a stream of hot air 68, 68' or the like such that sufficient surface temperature is reached.

Alternatively, the expanded polymer layer may be pre-manufactured and later laminated to the surrounding layers by means of conventional lamination techniques such as extrusion lamination with an intermediate bonding or adhesive layer.

Figure 7 schematically illustrates a method 70 of manufacturing a multilayer structure according to the invention, wherein two webs of paper 71 and 71', identical or of a similar type, are each fed to liquid film coating stations 72, 72' for coating of a dispersion of an aqueous gas barrier polymer composition, preferably PVOH further containing EAA, 73, 73'. The thus coated paper webs are advanced into drying stations 74, 74', at which the wet coatings are dried at high temperatures of up to 190°C, preferably about 170 °C. While still hot, the dried coated paper layers 75, 75'are advanced forward towards each other in such a way that the gas-barrier coated sides are facing each other. In a combined extrusion lamination and foam expanding station 76, the expandable polymer 77 is extruded and expanded between the coated paper layers, thus laminating the coated paper layers to each other by means of heat fusion and forming a multilayer structure comprising the intermediate expanded polymer layer 41. The paper layers may be coated by thermoplastic heat-sealable layers on their other side, corresponding to the outermost layers in the multilayer structure, in a separate extrusion coating operation (not shown) either before or after the steps of gas barrier coating and foamed layer lamination.

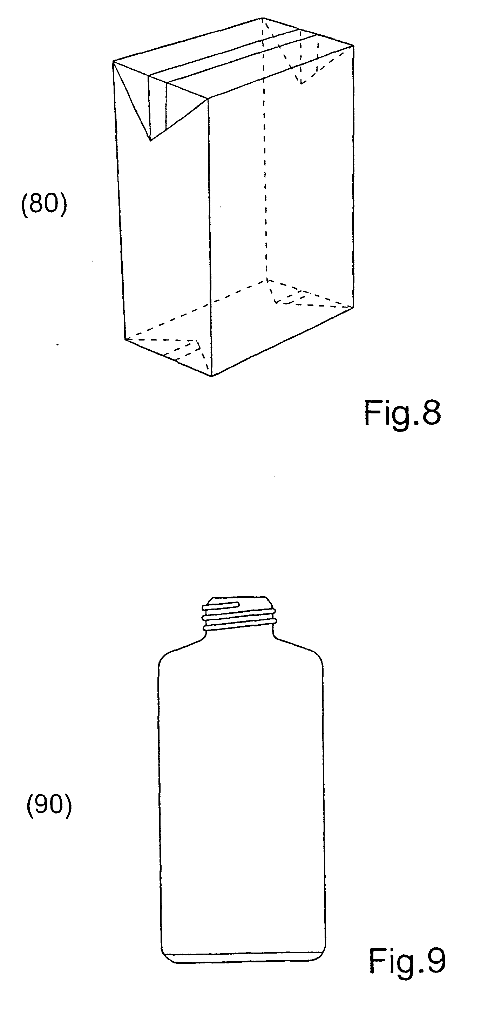

Figure 8 schematically shows an example of a packaging container 80 obtained by means of fold-forming, as described above.

Figure 9 schematically shows an example of a packaging container 90 obtained by means of extrusion/ blow moulding method as described in connection with Figure 5. The total thickness of the multilayers structure in the extrusion/ blow moulded packaging container wall is preferably from about 200 to about 2000 µm, depending on the size and the geometrical configuration of the container.

The present invention should not be considered as restricted to that described above and shown in the Figures, many modifications being conceivable without departing from the scope of the appended claims.

The above described invention thus solves the problem of providing a cost-effective, rigid multilayer structure also having gas barrier properties. Many variations of these multilayer structures, depending on the intended use and the cost requirements, are conceivable within the scope of the invention as defined in the appended patent claims, by selecting and "tailor-making" appropriate thicknesses and materials in relation to the properties desired. Furthermore, advantageous methods of providing such multilayer structures are provided, as well as packaging containers produced from the multialyer structures. In particular, extrusion/ blow moulded packaging containers and a method for producing them, are provided.

## Claims

1. Multilayer structure (10, 20; 30; 40) for packaging, at least comprising an intermediate layer of an expanded polymer (11; 21; 31;41), **characterised in that** the expandable polymer material comprises a first rigid component and a second ductile polymer component and that on each side of said expanded polymer layer, a gas barrier layer (12,13; 22,23; 34,35; 42,43) is arranged, the material of the gas barrier layer having an oxygen gas permeability of at most about 2000 cm³/m² at 23 °C and 0 % RH, per 1 µm thickness, during 24 h, at 1 atm and the multilayer structure having a bending resistance/ rigidity of at least 100 mN (as measured by SCAN-P 29:35).

2. Multilayer structure for packaging according to any one of the preceding claims, **characterised in that** the outermost layers (14,15; 22,23; 46,47) comprise a heat sealable thermoplastic polymer.

3. Multilayer structure for packaging, according to any one of the preceding claims, **characterised in that** said expanded polymer layer (11; 21; 31; 41) in its cells and/or open cavities is filled with an anaerobic gas or has a lower partial pressure of oxygen.

4. Multilayer structure for packaging, according to any one of the preceding claims, **characterised in that** the expanded polymer has at least about 500 cells/mm³, preferably at least about 1000 cells/mm³.

5. Multilayer structure for packaging, according to any one of the preceding claims, **characterised in that** said expanded polymer layer (11; 21; 31; 41) has cells, which are substantially closed without connection between the cellular cavities.

6. Multilayer structure for packaging, according to any one of the preceding claims, **characterised in that** the polymer material in said expanded polymer (11; 21; 31; 41) layer also is a polymer having gas barrier properties.

7. Multilayer structure for packaging, according to claim 6, **characterised in that** the polymer material of the expanded polymer has an oxygen gas permeability of at most about 1000 cm³/m² at 23°C and 0 % RH, per 1 µm thickness, during 24 h, at 1 atm.

8. Multilayer structure for packaging, according to any one of the preceding claims, **characterised in that** the first rigid polymer component is selected from the group essentially comprising a high density polyethylene and high melt-strength polypropylene and that the second, ductile polymer component has been selected from the group essentially comprising low density polyethylene and a general-purpose grade of polypropylene.

9. Multilayer structure for packaging, according to any one of the preceding claims, **characterised in that** the mixing ratio of the first, rigid polymer component to the second, ductile polymer component in the expanded polymer layer is between 1:3 and 3:1, preferably from about 1.25:1 to about 1.5:1.

10. Multilayer structure for packaging, according to any one of the preceding claims, **characterised in that** said gas barrier layer (12,13; 22,23; 34,35; 42,43) comprises a material selected from the group consisting of ethylenevinyl alcohol (EVOH), polyamide (PA), polyvinylidene chloride (PVDC), polyvinyl alcohol (PVOH), polyethylene naphthenate (PEN), polyacrylonitrile (PAN), copolymers from acrylonitrile and butylene, SiOx or carbon plasma coatings ("diamond coatings").

11. Multilayer structure for packaging, according to any one of the preceding claims, **characterised in that** it further comprises on each side of the expanded polymer a homogeneous layer (14,15: 22,23; 32,33; 44,45) contributing to the total rigidity of the multilayer structure, which layer comprises a polymer.selected from a group consisting of high density polyethylene (HOPE), polypropylene (PP), polyethyleneterephtalate (PET) and polybutyleneterephtalate (PBT).

12. Multilayer structure for packaging, according to any one of claims 1-9 **characterised in that** said gas barrier layers (12,13; 22,23; 34,35; 42,43), on each side of the expanded polymer layer, have a thickness and comprise a material such as to contribute to the total rigidity of the multilayer structure, preferably polyamide (PA), PEN, EVOH,PAN or copolymers from acrylonitrile and butylene, most preferably PA.

13. Multilayer structure for packaging according to any one of the preceding claims, **characterised in that** said layers have been laminated to each other in one operation by means of co-extrusion of the layers.

14. Multilayer structure for packaging according to any one of claims 1-10, **characterised in that** it comprises on each side of said expanded polymer layer, a paper layer (44, 45).

15. Multilayer structure for packaging according to any one of the preceding claims, **characterised in that** the gas barrier layer (12,13; 22,23; 42,43) is directly bonded to the expanded polymer layer (11; 21; 31; 41).

16. Multilayer structure according to any one of claims 14 or 15, **characterised in that** the material in said gas barrier layer (42, 43) at least comprises a polymer selected from the group consisting of ethylenevinyl alcohol (EVOH) or polyvinyl alcohol (PVOH).

17. Multilayer structure according to any one of claims 14-16, **characterised in that** the gas barrier polymer has been applied onto the paper layers (44, 45) by means of liquid film coating technology.

18. Multilayer structure according to any one of claims 14-17, **characterised in that** the gas barrier polymer material further comprises a copolymer additive containing functional groups selected from the group consisting essentially of carboxylic acid groups, carboxylic acid anhydride groups, metal salts of carboxylic acids and acetate groups.

19. Multilayer structure according to any one of claims 14-18, **characterised in that** the gas barrier polymer comprises PVOH and an ethylene acrylic acid copolymer (EAA).

20. Multilayer structure according to any one of claims 14-19, **characterised in that** the paper layers (44, 45) have a surface weight of between about 20 g/m² and about 120 g/m², preferably of between about 30 g/m² and about 60 g/m², most preferably of between about 40 g/m² and about 60 g/m².

21. Method for manufacturing a multilayer structure according to any one of the preceding claims, at least comprising the steps of mixing (52) a granulate of the expandable polymer material with a chemical, carbon dioxide-generating blowing agent during simultaneous heating (51, 53), for decomposition of the chemical blowing agent and for the formation of a molten plastic mass with homogeneously distributed carbon dioxide blisters; compressing the molten carbon dioxide-containing plastic mass to an excess pressure during simultaneous cooling (54) for converting the carbon dioxide blisters into an overcritical state, and forcing the compressed, cooled plastic melt through a nozzle aperture (55, 56) during simultaneous expansion of the overcritical carbon dioxide blisters for the formation of the expanded polymer layer.

22. Method according to claim 21, **characterised in that** the chemical, carbon dioxide-generating blowing agent is selected from the group essentially comprising sodium hydrocarbonate, citric acid and mixtures thereof, and that the quantity of blowing agent is approximately 0.5-2.5 % of the total weight of the mixture.

23. The method as claimed in any one of claims 21-22, **characterised in that** the molten, cooled plastic mass is forced through the nozzle aperture (56) at the same time as molten, homogeneous polymer, by a co-extrusion process, is forced through corresponding nozzle apertures for the formation of the surrounding outer layers (12,13,14,15) of the multilayer structure.

24. Method for manufacturing, a multilayer structure as defined in any one of claims 14-20, further comprising the steps of coating each of the two paper layers with a gas barrier polymer, advancing said paper layers towards each other, applying and expanding said expandable polymer between said paper layers and laminating the layers to each other.

25. Method for manufacturing a multilayer structure (40) as defined in any one of claims 14-20, further comprising the steps of coating each of the two paper layers (61, 61') with a gas barrier polymer (63,63'), heating the paper layers, advancing said coated paper layers (64,64') towards each other in such a way that the gas-barrier coated sides are facing each other, applying and expanding said expandable polymer (66) between said paper layers and laminating the layers to each other by means of heat fusion.

26. Method for manufacturing a multilayer structure (40) as defined in any one of claims 14-20, at least comprising the steps of coating each of the two paper layers (71,71') with an aqueous dispersion of a gas barrier polymer (73, 73') composition by means of liquid film coating technology (72,72'), subsequently drying (74,74') the coated paper layers at high temperature and advancing them towards each other in such a way that the gas-barrier coated sides are facing each other (75,75'), laminating the paper layers to each other while still hot by simultaneously applying and expanding said expandable polymer material (77) between them.

27. Method for manufacturing a multilayer structure according to any one of claims 24-26, further comprising the step of coating each of the paper layers (61,61'; 71,71') on its other side with a heat sealable liquid barrier polymer (46,47).

28. Dimensionally stable packaging container (80; 90) manufactured from the multilayer structure as defined in any one of claims 1-20.

29. An extrusion-blow moulded container (90) having a multilayer wall structure as defined in any one of claims 1-13 or 15.

30. Method for manufacturing an extrusion-blow moulded container (90) according to claim 29, at least comprising the steps of mixing (52) a granulate of the expandable polymer material with a chemical, carbon dioxide-generating blowing agent during. simultaneous heating (51, 53), for decomposition of the chemical blowing agent and for the formation of a molten plastic mass with homogeneously distributed carbon dioxide blisters, compressing the molten carbon dioxide-containing plastic mass to an excess pressure during simultaneous cooling (54) for converting the carbon dioxide blisters into an overcritical state, and forcing the compressed, cooled plastic melt through an annular nozzle aperture (55, 56) during simultaneous expansion of the overcritical carbon dioxide blisters for the formation of a hose of foamed structure, the forming of the hose of foamed structure taking place at the same time as molten, homogeneous polymer, by a co-extrusion process, is forced through corresponding, annular nozzle apertures (56) for the formation of the surrounding outer layers (12,13,14,15; 22,23) of the multilayer structure, accomodating the multilayer structured hose in a mould cavity (57) and inflating the hose by means of a high pressure gas against the inner walls of the mould cavity for the formation of the extrusion-blow moulded container (90) having said multilayer wall structure.

## Patentansprüche

1. Mehrschichtige Struktur (10,20; 30,40) für Verpackungszwecke mit wenigstens einer Zwischenschicht aus erweitertem Polymer (11; 21; 31; 41) **dadurch gekennzeichnet, dass** der erweiterbare Polymerstoff einen ersten steifen Bestandteil und einen zweiten biegsamen Polymerbestandteil umfasst, und dass auf jeder Seite der erweiterten Polymerschicht eine Gassperrschicht (12,13; 22,23; 34,35; 42,43) angeordnet ist, wobei das Gassperrschichtmaterial eine Sauerstoffgasdurchlässigkeit von höchstens ungefähr 2000 cm³/m² bei 23°C und 0% RH je 1µm Dicke während 24 Stunden bei 1 atm hat und die mehrschichtige Struktur eine Biegefestigkeit/Steifigkeit von mindestens 100 mN (wie in SCAN-P 29:35 gemessen) aufweist.

2. Mehrschichtige Struktur für Verpackungszwecke nach einem der vorhergehenden Ansprüche, **dadurch gekennzeichnet, dass** die äußersten Schichten (14,15; 22,23; 46,47) ein heißsiegelbares thermoplastisches Polymer umfassen.

3. Mehrschichtige Struktur für Verpackungszwecke nach einem der vorhergehenden Ansprüche, **dadurch gekennzeichnet, dass** die erweiterte Polymerschicht (11; 21; 31; 41) in ihren Zellen und/oder offenen Hohlräumen mit einem anaeroben Gas gefüllt ist oder einen niedrigeren Sauerstoffpartialdruck aufweist.

4. Mehrschichtige Struktur für Verpackungszwecke nach einem der vorhergehenden Ansprüche, **dadurch gekennzeichnet, dass** das erweiterte Polymer mindestens etwa 500 Zellen/mm³, vorzugsweise mindestens etwa 1000 Zellen/mm³, hat.

5. Mehrschichtige Struktur für Verpackungszwecke nach einem der vorhergehenden Ansprüche, **dadurch gekennzeichnet, dass** die erweiterte Polymerschicht (11; 21; 31; 41) Zellen aufweist, die ohne Verbindung zwischen den Zellhohlräumen im Wesentlichen geschlossen sind.

6. Mehrschichtige Struktur für Verpackungszwecke nach einem der vorhergehenden Ansprüche, **dadurch gekennzeichnet, dass** das Polymermaterial in der erweiterten Polymerschicht(11; 21; 31; 41) ebenfalls ein Polymer mit Gassperreigenschaften ist.

7. Mehrschichtige Struktur für Verpackungszwecke nach Anspruch 6, **dadurch gekennzeichnet, dass** das Polymermaterial des erweiterten Polymers eine Sauerstoffgasdurchlässigkeit von höchstens etwa 1000 cm³/m² bei 23 °C und 0% RH je 1 µm Dicke während 24 Stunden bei 1 atm aufweist.

8. Mehrschichtige Struktur für Verpackungszwecke nach einem der vorhergehenden Ansprüche, **dadurch gekennzeichnet, dass** der erste, steife Polymerbestandteil aus der Gruppe ausgewählt wurde, die hauptsächlich ein Polyethylen hoher Dichte und Polypropylen mit hoher Schmelzkraft umfasst, und dass der zweite, biegsame Polymerbestandteil aus der Gruppe ausgewählt wurde, die hauptsächlich Polyethylen niedriger Dichte und ein Mehrzweckpolypropylen umfasst.

9. Mehrschichtige Struktur für Verpackungszwecke nach einem der vorhergehenden Ansprüche, **dadurch gekennzeichnet, dass** das Mischverhältnis zwischen erstem, steifen Polymerbestandteil und zweitem, biegsamen Polymerbestandteil in der erweiterten Polymerschicht zwischen 1:3 und 3:1; vorzugsweise ca. 1,25:1 bis ca. 1,5:1 liegt.

10. Mehrschichtige Struktur für Verpackungszwecke nach einem der vorhergehenden Ansprüche, **dadurch gekennzeichnet, dass** die Gassperrschicht (12,13; 22,23; 34,35; 42,43) ein Material umfasst, das aus der Gruppe ausgewählt wurde, die aus Ethylenvinylalkohol (EVOH), Polyamid (PA), Polyvinylidenchlorid (PVDC), Polyvinylalkohol (PVOH), Polyethylennaphthenat (PEN), Polyacrylnitril (PAN), Copolymere aus Acrylnitril und Buten, SiOx oder Kohlenstoffplasmabeschichtungen ("Diamantbeschichtungen") besteht.

11. Mehrschichtige Struktur für Verpackungszwecke nach einem der vorhergehenden Ansprüche, dadurch gekennzeichnet, dass diese des weiteren auf jeder Seite des erweiterten Polymers eine homogene Schicht (14,15; 22,23; 32,33; 44,45) umfasst, die zur Gesamtsteifigkeit der mehrschichtigen Struktur beiträgt, wobei die Schicht ein Polymer umfasst, das aus einer Gruppe bestehend aus Polyethylen hoher Dichte (HDPE), Polypropylen (PP), Polyethylenterephthalat (PET) und Polybutylenterephthalat (PBT) ausgewählt wurde.

12. Mehrschichtige Struktur für Verpackungszwecke nach einem der Ansprüche 1 - 9, **dadurch gekennzeichnet, dass** die Gassperrschichten (12,13; 22,23; 34,35; 42,43) auf jeder Seite der erweiterten Polymerschicht eine Dicke aufweisen und ein Material enthalten, um damit zur Gesamtsteifigkeit der mehrschichtigen Struktur, vorzugsweise Polyamid (PA), PEN, EVOH, PAN oder Copolymere aus Acrylnitril und Buten, am besten PA, beizutragen.

13. Mehrschichtige Struktur für Verpackungszwecke nach einem der vorhergehenden Ansprüche, **dadurch gekennzeichnet, dass** die Schichten in einem Arbeitsgang durch Coextrusion der Schichten aneinander laminiert wurden.

14. Mehrschichtige Struktur für Verpackungszwecke nach einem der Ansprüche 1 -10, **dadurch gekennzeichnet, dass** sie auf jeder Seite der erweiterten Polymerschicht eine Papierschicht (44,45) umfasst.

15. Mehrschichtige Struktur für Verpackungszwecke nach einem der vorhergehenden Ansprüche, **dadurch gekennzeichnet, dass** die Gassperrschicht (12,13; 22,23; 42,43) unmittelbar an die erweiterte Polymerschicht (11; 21; 31; 41) gebunden ist.

16. Mehrschichtige Struktur für Verpackungszwecke nach einem der Ansprüche 14 oder 15, **dadurch gekennzeichnet, dass** das Material in der Gassperrschicht (42,43) wenigstens ein Polymer umfasst, das aus der Gruppe ausgewählt wurde, die aus Ethylenvinylalkohol (EVOH) oder Polyvinylalkohol (PVOH) besteht.

17. Mehrschichtige Struktur für Verpackungszwecke nach einem der Ansprüche 14 - 16, **dadurch gekennzeichnet, dass** das Gassperrpolymer mittels Flüssigkeitsfilmbeschichtungstechnologie auf die Papierschichten (44,45) aufgebracht wurde.

18. Mehrschichtige Struktur für Verpackungszwecke nach einem der Ansprüche 14 - 17, **dadurch gekennzeichnet, dass** das Gassperrpolymermaterial ferner einen Copolymerzusatz umfasst, der Funktionsgruppen enthält, die aus der hauptsächlich aus Carbonsäuregruppen, Carbonsäureanhydridgruppen, Metallsalze der Carbonsäuren und Acetatgruppen bestehenden Gruppe ausgewählt wurden.

19. Mehrschichtige Struktur für Verpackungszwecke nach einem der Ansprüche 14 - 18, **dadurch gekennzeichnet, dass** das Gassperrpolymer PVOH und ein Ethylenacrylsäurecopolymer (EAA) enthält.

20. Mehrschichtige Struktur für Verpackungszwecke nach einem der Ansprüche 14 - 19, **dadurch gekennzeichnet, dass** die Papierschichten (44,45) ein Oberflächengewicht zwischen etwa 20 g/m² und etwa 120 g/m², vorzugsweise zwischen etwa 30 g/m² und etwa 60 g/m², am besten zwischen etwa 40 g/m² und etwa 60 g/m² haben.

21. Verfahren zur Herstellung einer mehrschichtigen Struktur nach einem der vorhergehenden Ansprüche, das zumindest die Schritte umfasst: Mischen (52) eines Granulats aus dem erweiterbaren Polymermaterial und einem chemischen, Kohlendioxid bildenden Treibmittel bei gleichzeitigem Erhitzen (51,53) zum Abbau des chemischen Treibmittels und zur Bildung einer geschmolzenen Kunststoffmasse mit homogen verteilten Kohlendioxidblasen; Verdichten der geschmolzenen, Kohlendioxid enthaltenden Kunststoffmasse bis zu einem Überdruck bei gleichzeitigem Abkühlen (54), um die Kohlendioxidblasen in einen überkritischen Zustand umzuwandeln und Treiben der verdichteten, abgekühlten Kunststoffschmelze durch eine Düsenöffnung (55,56) bei gleichzeitiger Ausdehnung der überkritischen Kohlendioxidblasen zur Bildung der erweiterten Polymerschicht.

22. Verfahren nach Anspruch 21, **dadurch gekennzeichnet, dass** das chemische, Kohlendioxid bildende Treibmittel aus der Gruppe ausgewählt wurde, die hauptsächlich Natriumhydrogencarbonat, Zitronensäure und Gemische daraus enthält, und dass die Treibmittelmenge ca. 0,5 - 2,5 % des Gesamtgewichts des Gemisches beträgt.

23. Verfahren nach einem der Ansprüche 21 - 22, **dadurch gekennzeichnet, dass** die geschmolzene, abgekühlte Kunststoffmasse zur selben Zeit durch die Düsenöffnung (56) getrieben wird wie das geschmolzene, homogene Polymer, mittels Coextrusionsprozess, durch entsprechende Düsenöffnungen zur Bildung der umgebenden äußeren Schichten (12, 13, 14, 15) der mehrschichtigen Struktur getrieben wird.

24. Verfahren zur Herstellung einer mehrschichtigen Struktur nach einem der Ansprüche 14 - 20, das ferner folgende Schritte umfasst: Beschichten jeder der beiden Papierschichten mit einem Gassperrpolymer, gegenseitiges Annähern der Papierschichten, Aufbringen und Ausdehnen des erweiterbaren Polymers zwischen den Papierschichten und Laminieren der Schichten aneinander.

25. Verfahren zur Herstellung einer mehrschichtigen Struktur (40) nach einem der Ansprüche 14 - 20, das ferner folgende Schritte umfasst: Beschichten jeder der beiden Papierschichten (61, 61') mit einem Gassperrpolymer (63, 63'), Erhitzen der Papierschichten, gegenseitiges Annähern der beschichteten Papierschichten (64, 64'), so dass sich die mit einer Gassperrschicht versehenen Seiten gegenüber liegen, Auftragen und Ausdehnen des erweiterbaren Polymers (66) zwischen den Papierschichten und aneinander Laminieren der Schichten durch Hitzefusion.

26. Verfahren zur Herstellung einer mehrschichtigen Struktur (40) nach einem der Ansprüche 14 - 20, das zumindest folgende Schritte umfasst: Beschichten jeder der beiden Papierschichten (71, 71') mit einer wässerigen Dispersion aus einer Gassperrpolymerzusammensetzung (73, 73') mittels Flüssigkeitsfilmbeschichtungstechnologie (72, 72'), anschließendem Trocknen (74,74') der beschichteten Papierschichten bei hoher Temperatur und deren gegenseitiges Annähern, so dass sich die mit einer Gassperrschicht beschichteten Seiten gegenüber liegen (75, 75'), aneinander Laminieren der Papierschichten, solange diese noch heiß sind, durch gleichzeitiges Auftragen und Ausdehnen des erweiterbaren Polymermaterials (77) zwischen diesen.

27. Verfahren zur Herstellung einer mehrschichtigen Struktur nach einem der Ansprüche 24 - 26, das ferner den Schritt des Beschichtens jeder der beiden Papierschichten (61,61'; 71,71') auf der jeweils anderen Seite mit einem hitzeversiegelbaren Flüssigkeitssperrpolymer (46,47) umfasst.

28. Formbeständiger Verpackungsbehälter (80; 90), der aus der mehrschichtigen Struktur gemäß einem der Ansprüche 1 - 20 hergestellt wurde.

29. Ein durch Extrusionsblasformung gebildeter Behälter (90) mit einer mehrschichtigen Wandstruktur nach einem der Ansprüche 1 - 13 oder 15.

30. Verfahren zur Herstellung eines durch Extrusionsblasformung gebildeten Behälters (90) nach Anspruch 29, das zumindest folgende Schritte umfasst: Mischen (52) eines Granulats aus dem erweiterbaren Polymermaterial mit einem chemischen, Kohlendioxid bildenden Treibmittel bei gleichzeitigem Erhitzen (51,53) zum Abbau des chemischen Treibmittels und zur Bildung einer geschmolzenen Kunststoffmasse mit homogen verteilten Kohlendioxidblasen, Verdichten der geschmolzenen, Kohlendioxid enthaltenden Kunststoffmasse bis zu einem Überdruck bei gleichzeitigem Abkühlen (54), um die Kohlendioxidblasen in einen überkritischen Zustand umzuwandeln und Treiben der verdichteten, abgekühlten Kunststoffschmelze durch eine ringförmige Düsenöffnung (55,56) bei gleichzeitiger Ausdehnung der überkritischen Kohlendioxidblasen, um einen Schlauch mit geschäumter Struktur zu bilden, wobei der Schlauch mit geschäumter Struktur zur selben Zeit gebildet wird wie das geschmolzene, homogene Polymer durch einen Coextrusionsprozess durch die entsprechenden ringförmigen Düsenöffnungen (56), zur Bildung der umgebenden äußeren Schichten (12, 13, 14, 15; 22, 23) der mehrschichtigen Struktur, getrieben wird, Beherbergen des mehrschichtig strukturierten Schlauches in einer Formhöhlung (57) und Aufblasen des Schlauches mittels Hochdruckgas gegen die Innenwände der Formhöhlung, um den durch Extrusionsblasformung gebildeten Behälter (90) mit dieser mehrschichtigen Wandstruktur zu bilden.

## Revendications

1. Structure multicouche (10, 20 ; 30 ; 40) d'emballage, comprenant au moins une couche intermédiaire de polymère expansé (11 ; 21 ; 31 ; 41), **caractérisée en ce que** la substance polymère expansible comprend un premier composant rigide et un second composant polymère ductile et **en ce que** sur chaque face de ladite couche de polymère expansé, une couche de barrière contre les gaz (12, 13 ; 22, 23 ; 34, 35 ; 42, 43) est disposée, la substance de la couche de barrière contre les gaz ayant une perméabilité pour l'oxygène gazeux d'au plus environ 2000 cm³/m² à 23°C et à une humidité relative de 0 %, pour 1 µm d'épaisseur, pendant 24 heures, sous 1 atmosphère et la structure multicouche ayant une résistance/rigidité à la flexion d'au moins 100 mN (telle que mesurée par SCAN-P 29:35).

2. Structure multicouche d'emballage selon l'une quelconque des revendications précédentes, **caractérisée en ce que** les couches les plus externes (14, 15 ; 22, 23 ; 46, 47) comprennent un polymère thermoplastique thermoscellable.

3. Structure multicouche d'emballage selon l'une quelconque des revendications précédentes, **caractérisée en ce que** ladite couche (11 ; 21 ; 31 ; 41) de polymère expansé a ses cellules et/ou ses cavités ouvertes remplies par un gaz anaérobie ou a une pression partielle en oxygène inférieure.

4. Structure multicouche d'emballage selon l'une quelconque des revendications précédentes, **caractérisée en ce que** le polymère expansé possède au moins environ 500 cellules/mm³, de préférence au moins environ 1000 cellules/mm³.

5. Structure multicouche d'emballage selon l'une quelconque des revendications précédentes, **caractérisée en ce que** la couche de polymère expansé (11 ; 21 ; 31 ; 41) possède des cellules essentiellement fermées sans connexion entre les cavités cellulaires.

6. Structure multicouche d'emballage selon l'une quelconque des revendications précédentes, **caractérisée en ce que** la substance polymère dans ladite couche de polymère expansé (11 ; 21 ; 31 ; 41) est également un polymère ayant les propriétés d'une barrière contre les gaz.

7. Structure multicouche d'emballage selon la revendication 6, **caractérisée en ce que** la substance polymère du polymère expansé a une perméabilité pour l'oxygène gazeux d'au plus environ 1000 cm³/m² à 23°C et à une humidité relative de 0 %, pour 1 µm d'épaisseur, pendant 24 heures, sous 1 atmosphère.

8. Structure multicouche d'emballage selon l'une quelconque des revendications précédentes, **caractérisée en ce que** le premier composant polymère rigide est choisi dans le groupe comprenant essentiellement un polyéthylène haute densité et un polypropylène à haute résistance thermique et **en ce que** le second composant polymère ductile a été choisi dans le groupe comprenant essentiellement un polyéthylène basse densité et un polypropylène de catégorie universelle.

9. Structure multicouche d'emballage selon l'une quelconque des revendications précédentes, **caractérisée en ce que** le rapport de mélange du premier composant polymère rigide sur le second composant polymère ductile dans la couche de polymère expansé est entre 1:3 et 3:1, de préférence d'environ 1,25:1 à environ 1,5:1.

10. Structure multicouche d'emballage selon l'une quelconque des revendications précédentes, **caractérisée en ce que** la couche de barrière contre les gaz (12, 13 ; 22, 23 ; 34, 35 ; 42, 43) comprend une substance choisie dans le groupe constitué par l'éthylène alcool vinylique (EVOH), un polyamide (PA), le chlorure de polyvinylidène (PVDC), l'alcool polyvinylique (PVOH), le polyéthylène naphténate (PEN), le polyacrylonitrile (PAN), les copolymères d'acrylonitrile et de butylène, le revêtement SiOₓ ou le revêtement carbone assisté par plasma (« revêtement diamant »).

11. Structure multicouche d'emballage selon l'une quelconque des revendications précédentes, **caractérisée en ce qu'**elle comprend en outre sur chaque face du polymère expansé une couche homogène (14, 15 ; 22, 23 ; 32, 33 ; 44, 45) contribuant à la rigidité totale de la structure multicouche, ladite couche comprend un polymère choisi dans le groupe constitué par un polyéthylène haute densité (HDPE), le polypropylène (PP), le polyéthylènetéréphtalate (PET) et le polybutylènetéréphtalate (PBT).

12. Structure multicouche d'emballage selon l'une quelconque des revendications 1 à 9, **caractérisée en ce que** les couches de barrière contre les gaz (12, 13 ; 22, 23 ; 34, 35 ; 42, 43), sur chaque face de la couche de polymère expansé, ont une épaisseur et comprennent une substance contribuant à la rigidité totale de la structure multicouche, de préférence un polyamide (PA), le PEN, le EVOH, le PAN ou des copolymères d'acrylonitrile et de butylène, de préférence le PA.

13. Structure multicouche d'emballage selon l'une quelconque des revendications précédentes, **caractérisée en ce que** lesdites couches ont été laminées l'une contre l'autre en une opération par co-extrusion des couches.

14. Structure multicouche d'emballage selon l'une quelconque des revendications 1 à 10, **caractérisée en ce qu'**elle comprend sur chaque face de ladite couche de polymère expansé, une couche de papier (44, 45).

15. Structure multicouche d'emballage selon l'une quelconque des revendications précédentes, **caractérisée en ce que** la couche de barrière contre les gaz (12, 13 ; 22, 23 ; 42, 43) est directement collée à la couche de polymère expansé (11 ; 21 ; 31 ; 41).

16. Structure multicouche selon la revendication 14 ou 15, **caractérisée en ce que** 1a substance dans ladite couche de barrière contre les gaz (42, 43) comprend au moins un polymère choisi dans le groupe constitué par l'éthylène alcool vinylique (EVOH) et l'alcool polyvinylique (PVOH).

17. Structure multicouche selon l'une quelconque des revendications 14 à 16, **caractérisée en ce que** la barrière polymère contre les gaz a été appliquée sur les couches de papier (44, 45) au moyen de la technique de revêtement par film liquide.

18. Structure multicouche selon l'une quelconque des revendications 14 à 17, **caractérisée en ce que** la substance polymère de la barrière contre les gaz comprend en outre un additif copolymère contenant des groupes fonctionnels choisis dans le groupe essentiellement constitué par les groupes acides carboxyliques, les groupes anhydrides d'acides carboxylique, les sels de métaux d'acides carboxyliques et les groupes acétates.

19. Structure multicouche selon l'une quelconque des revendications 14 à 18, **caractérisée en ce que** la barrière polymère contre les gaz comprend le PVOH et un copolymère d'éthylène et d'acide acrylique (EAA).

20. Structure multicouche selon l'une quelconque des revendications 14 à 19, **caractérisée en ce que** les couches de papier (44, 45) ont un poids de surface entre environ 20 g/m² et environ 120 g/m², de préférence entre environ 30 g/m² et environ 60 g/m², de préférence entre environ 40 g/m² et environ 60 g/m².

21. Procédé de fabrication d'une structure multicouche selon l'une quelconque des revendications précédentes, comprenant au moins les étapes de mélanger (52) la substance polymère expansible sous forme de granulés à un agent chimique d'expansion générant du dioxyde de carbone simultanément pendant le chauffage (51, 53), pour décomposer l'agent chimique d'expansion et pour former une masse de plastique fondu possédant des bulles de dioxyde de carbone réparties de manière homogène ; compresser la masse de plastique fondu contenant du dioxyde de carbone à une surpression simultanément pendant le refroidissement (54) pour convertir les bulles de dioxyde de carbone à un état surcritique, et forcer la matière plastique fondue refroidie et compressée à travers l'ouverture (55, 56) d'une buse simultanément pendant l'expansion des bulles de dioxyde de carbone surcritiques pour former la couche de polymère expansé.

22. Procédé selon la revendication 21, **caractérisée en ce que** l'agent chimique d'expansion générant du dioxyde de carbone est choisi dans le groupe comprenant essentiellement l'hydrocarbonate de sodium, l'acide citrique et des mélanges de ceux-ci, et **en ce que** la quantité d'agent d'expansion est approximativement de 0,5 à 2,5 % du poids total du mélange.

23. Procédé selon l'une quelconque des revendications 21 à 22, **caractérisée en ce que** la masse de plastique fondue et refroidie est forcée à travers l'ouverture (56) d'une buse au moment même où le polymère fondu homogène, selon un procédé de co-extrusion, est forcé à travers les ouvertures de buses correspondantes, pour former les couches externes (12, 13, 14, 15) de la structure multicouche.

24. Procédé de fabrication d'une structure multicouche telle que définie dans l'une quelconque des revendications 14 à 20, comprenant en outre les étapes d'enrober chacune des deux couches de papier avec une barrière polymère contre les gaz, avancer l'une vers l'autre lesdites couches de papier, appliquer et réaliser l'expansion dudit polymère expansible entre lesdites couches de papier et laminer les couches l'une contre l'autre.

25. Procédé de fabrication d'une structure (40) multicouche telle que définie dans l'une quelconque des revendications 14 à 20, comprenant en outre les étapes d'enrober chacune des deux couches de papier (61, 61') avec une barrière polymère contre les gaz (63, 63'), chauffer les couches de papier, avancer l'une vers l'autre lesdites couches de papier enrobées (64, 64') d'une telle manière que l'une et l'autre des faces enrobées par la barrière contre les gaz se fassent face, appliquer et réaliser l'expansion dudit polymère expansible (66) entre lesdites couches de papier et laminer les couches l'une contre l'autre par fusion thermique.

26. Procédé de fabrication d'une structure (40) multicouche telle que définie dans l'une quelconque des revendications 14 à 20, comprenant au moins les étapes d'enrober chacune des deux couches de papier (71, 71') avec une dispersion aqueuse d'une composition de barrière polymère contre les gaz (73, 73') au moyen de la technique de revêtement par film liquide(72, 72'), sécher (74, 74') par la suite les couches de papier enrobées à une température élevée et les avancer l'une vers l'autre d'une telle manière que l'une et l'autre (75, 75') des faces enrobées par la barrière contre les gaz se fassent face, laminer les couches l'une contre l'autre pendant qu'elles sont encore chaudes simultanément en réalisant l'application et l'expansion de ladite substance (77) expansible polymère entre elles.

27. Procédé de fabrication d'une structure multicouche selon l'une quelconque des revendications 24 à 26, comprenant en outre l'étape d'enrober les autres faces de chacune des couches de papier (61, 61' ; 71, 71') avec une barrière polymère liquide thermoscellable (46, 47).

28. Contenant d'emballage (80 ; 90) à dimensions stables fabriqué à partir de la structure multicouche telle que définie dans l'une quelconque des revendications 1 à 20.

29. Contenant moulé par extrusion-soufflage (90) ayant une structure de paroi multicouche telle que définie dans l'une quelconque des revendications 1 à 13 ou 15.

30. Procédé de fabrication d'un contenant moulé par extrusion-soufflage (90) selon la revendication 29, comprenant au moins les étapes de mélanger (52) la substance polymère expansible sous forme de granulés à un agent chimique d'expansion générant du dioxyde de carbone simultanément pendant le chauffage (51, 53), pour décomposer l'agent chimique d'expansion et pour former une masse de plastique fondu possédant des bulles de dioxyde de carbone réparties de manière homogène, compresser la masse de plastique fondu contenant du dioxyde de carbone à une surpression simultanément pendant le refroidissement (54) pour convertir les bulles de dioxyde de carbone à un état surcritique, et forcer la matière fondue de plastique refroidie et compressée à travers l'ouverture annulaire d'une buse (55, 56) simultanément pendant l'expansion des bulles de dioxyde de carbone surcritiques pour former un boyau à structure en mousse, la formation du boyau à structure en mousse ayant lieu au moment même où le polymère fondu homogène, selon un procédé de co-extrusion, est forcé à travers les ouvertures annulaires de buses (56) correspondantes pour former les couches externes (12, 13, 14, 15 ; 22, 23) de la structure multicouche, placer le boyau à structure multicouche dans la cavité (57) d'un moule et gonfler le boyau au moyen d'un gaz à haute pression contre les parois internes de la cavité du moule pour former un contenant (90) moulé par extrusion-soufflage ayant comme ladite structure de paroi multicouche.
